# EUROPEAN PATENT APPLICATION

(11) **EP 1 712 115 A1**
(43) Date of publication of application: **18.10.2006**
(21) Application number: 05425220.0
(22) Date of filing: 13.04.2005
(51) Int. Cl.: A01B 51/02, B62D 49/02

(54) **Lifting vehicle with a support frame with closed section**

(71) Applicant: Merlo Project S.r.l., I-12020 S. Defendente di Cervasca (Cuneo) (IT)
(72) Inventor: Galfre', Renato, c/o Merlo Project S.r.l., 12020 San Defendente di Cervasca (Cuneo) (IT)
(74) Representative: Marchitelli, Mauro

(57) **Abstract**

Lifting vehicle comprising:
- a support frame (12) having a rear section (30), a front section (32) and a central section (34) having a closed shape,
- a rear axle (14) and a front axle (16) connected respectively to the rear section (30) and to the front section (32) of the support frame (12),
- a lifting arm (18) articulated to the rear section (30) of the support frame (12) and extending forward,
- a control and drive cab (20) positioned laterally to the support frame (12), and
- an internal combustion engine (22) positioned laterally with respect to the control and drive cab (20).

## Description

The present invention relates to a lifting vehicle with a support frame that bears a rear axle, a front axle and a lifting arm articulated to the support frame in a rear section thereof and extending forward.

More specifically, the invention relates to a lifting vehicle according to the preamble of claim 1, which is known from EP-A-945395 by the same Applicant. In lifting vehicles of this type, the support frame extends in longitudinal direction in a central position of the vehicle. The lifting arm is positioned centrally above the support frame and a control and drive cab is positioned laterally to the support frame. An internal combustion engine is positioned laterally to the control and drive cab at the opposite side from the support frame.

In known solutions, the support frame is formed by strong metal plates welded together and it has a general channel configuration, with a U-shaped cross section with the opening oriented upwards, possibly with transverse or longitudinal reinforcements to enhance torsional rigidity. The channel shape of the frame serves to form a housing open upwards and extending in the longitudinal direction within which is received the lifting arm in its lowered position.

In lifting vehicles of the type described previously, the support frame must have a great torsional strength under the action of a twisting moment applied on the longitudinal axis of the vehicle.

The object of the present invention is to provide a lifting vehicle of the type described previously, having a support frame with enhanced torsional strength characteristics.

According to the present invention, said object is achieved by a lifting vehicle having the characteristics set out in claim 1.

Further characteristics and advantages of the lifting vehicle according to the present invention shall become readily apparent in the detailed description that follows, provided purely by way of non limiting example, in which:
- Figure 1 is a partial perspective view of a vehicle according to the present invention,
- Figures 2 and 3 are respectively a lateral view and a plan view of the vehicle of Figure 1,
- Figure 4 is a perspective view of the support frame of the vehicle of Figure 1,
- Figures 5 and 6 are respectively a lateral view and a plan view of the vehicle of Figure 4,
- Figures 7 and 8 are sections according to the lines VII-VII and VIII-VIII of Figure 6,
- Figure 9 is a schematic perspective view of a second embodiment of a vehicle according to the invention,
- Figures 10 and 11 are respectively a lateral view and a plan view of the vehicle of Figure 9,
- Figure 12 is a schematic perspective view of the support frame of the vehicle of Figure 9,
- Figures 13 and 14 are respectively a lateral view and a plan view of the support frame of Figure 12,
- Figure 15 is a schematic section according to the line XV-XV of Figure 14, and
- Figures 16 and 17 are sections according to the lines XVII-XVII and XVIII-XVIII of Figure 14.

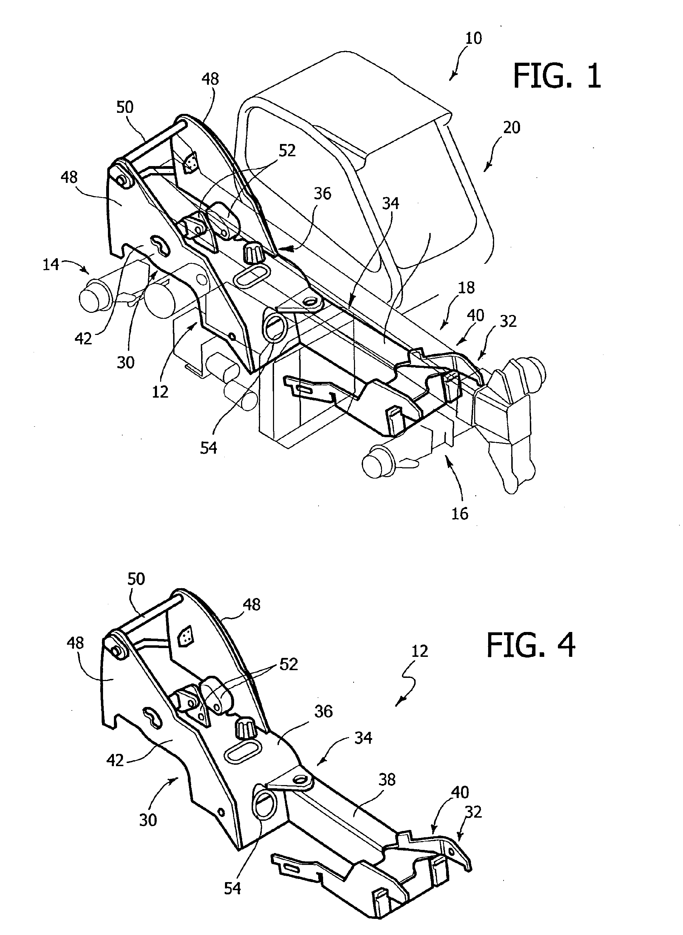

With reference to Figures 1 through 3, the number 10 designates a part of a lifting vehicle according to a first embodiment of the present invention. The general architecture of the vehicle 10 substantially corresponds to that of the vehicle shown in EP-A-0945395. The vehicle 10 comprises a support frame 12 illustrated with bold lines in Figures 1 through 3 and illustrated by itself in Figures 4 through 6. The support frame 12 bears a rear axle 14 and a front axle 16. In the embodiment illustrated in Figures 1 through 3, the outer case of each of the axles 14, 16 is fastened directly to the support frame 12. The support frame 12 bears a lifting arm 18 positioned centrally in the vehicle 10 and extending from the rear part towards the front part of the vehicle. The front end of the arm 18 generally extends beyond the front end of the vehicle 10.

The lifting arm 18 is usually of the telescopic type and bears at its free end an attachment device for the connection of tools of various types, such as a gripping equipment with forks, a blade, an aerial platform, etc. The lifting arm 18 is articulated to the support frame 12 around a horizontal axis. Between the support frame 12 and the lifting arm 18 is positioned at least one lifting hydraulic cylinder that commands the oscillation of the arm 18 around its articulation axis.

The vehicle 10 comprises a control and drive cab 20 positioned laterally with respect to the support frame 12 and also laterally with respect to the lifting arm 18 when the arm is in the lowered position. Inside the control and drive cab are positioned all command and regulation devices to control the various functions of the vehicle 10, among them the hydraulic distributors for lifting/lowering and extending/retracting the arm 18 and the controls for driving the vehicle.

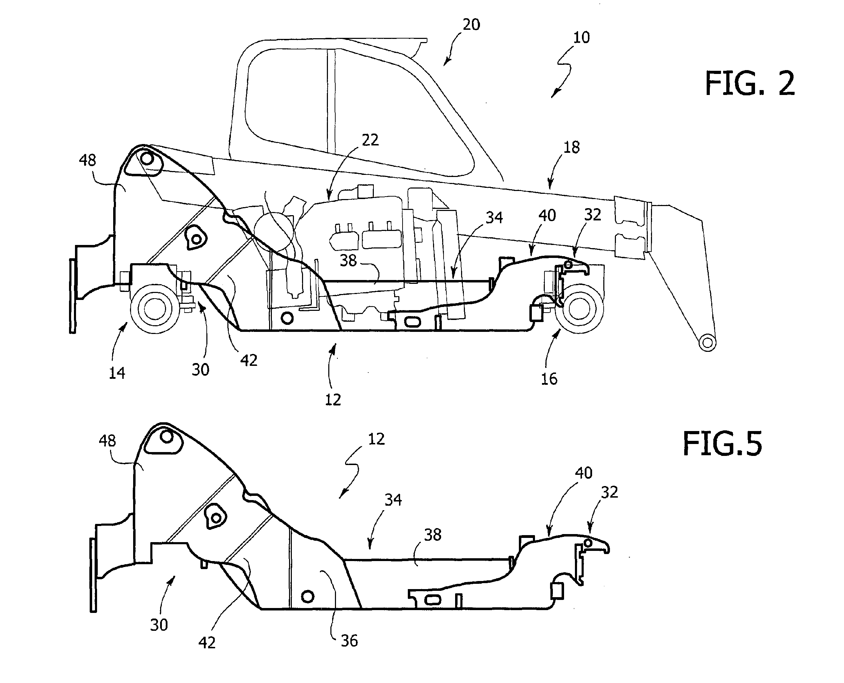

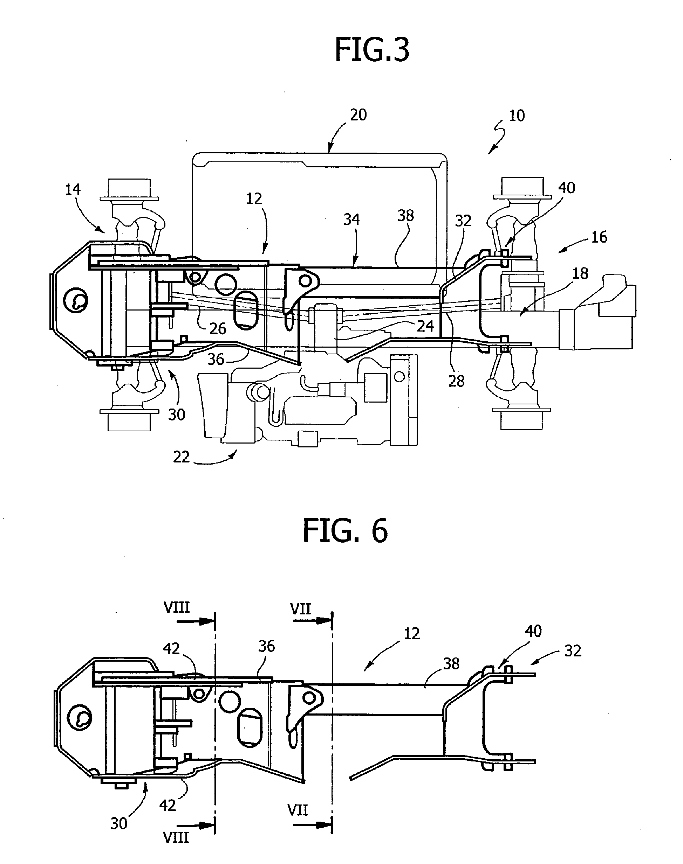

With reference in particular to Figures 2 and 3, the vehicle 10 further comprises an internal combustion engine 22 positioned laterally with respect to the control and drive cab. The engine 22 is positioned laterally to the support frame 12 at the opposite side relative to the cab 20. The output shaft of the engine 22 is connected to a gearbox 24 that drives a rear transmission shaft 26 connected to the rear axle 14 and a forward transmission shaft 28 connected to the front axle 16. The engine 22 also drives a pump that feeds the hydraulic circuits for the operation and control of the various hydraulic actuators present on the vehicle 10.

With reference to Figures 4, 5 and 6, the support frame 12 comprises a rear section 30, a front section 32 and a central section 34 that extends from the rear section to the front section. According to the present invention, the central section 34 of the frame 12 has a closed shape. The term "closed shape" means a generic three-dimensional shape with an outer surface closed on itself. In a cross section with a plane orthogonal to the longitudinal axis of the vehicle, the central section 34 forms a geometric figure with a closed perimeter. The closed shape of the central section 34 can have box shape, tubular shape or a combination of the two. The term "box shape" means a three-dimensional solid closed substantially on all sides. The possible presence of holes or openings does not substantially change the box-like nature of the solid. The term "tubular shape" means an element elongated along a direction, closed along its lateral surface and which can be open or closed at the ends. The tubular shape can have constant or tapered section and with transverse section of any shape, e.g. circular, square, rectangular, etc.

In the example illustrated in the figure, the central section 34 of the support frame 12 comprises a box-like portion 36 and a tubular portion 38 fastened to each other. The box-like portion 36 is adjacent to the rear section 30 and the tubular portion 38 is adjacent the front section 32 of the support frame 12. To the front end of the tubular portion 28 is fastened a flange 40 made of strong metallic plate whereto is fastened the case of the front axle 16. The flange 40 constitutes the front section of the support frame 12.

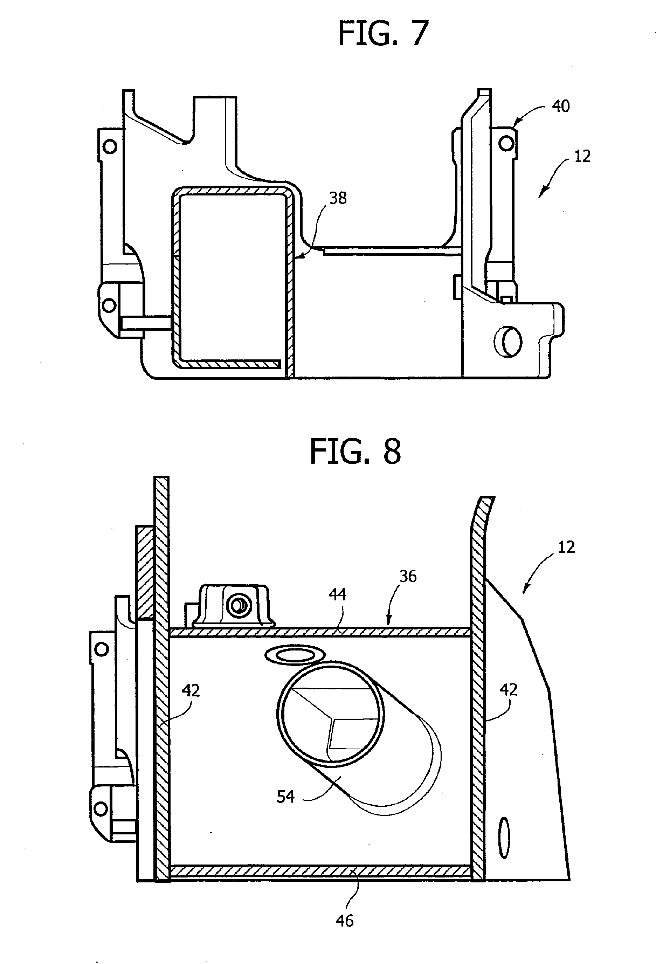

With reference to Figures 7 and 8, in a transverse section relative to the longitudinal axis of the vehicle 10 the portions 36 and 38 both have a closed shape, e.g. rectangular. The tubular portion 38 preferably has a rectangular shape, slightly elongated in the vertical direction and it is made of strong metal plate, bent and welded. The box-like portion 36 has in a cross section a rectangular shape, slightly elongated in the horizontal direction and comprises two parallel vertical walls 42 connected to each other by an upper wall 44 and by a lower wall 46. All the walls of the box-like portion 36 are constituted by strong metal plate. The vertical walls 42 of the box-like portion 46 extend upwards above the upper wall 44 and form two projections 48 in the rear area of the frame 12. With reference to Figures 1, 2, 4 and 5, the projections 48 bear an articulation pivot pin 50 positioned horizontally and transverse relative to the longitudinal axis of the vehicle. The articulation pivot pin 50 is fastened at its ends to the projections 48 and forms the axis of articulation of the lifting arm 18.

The box-like portion 36 of the support frame 12 defines a closed inner volume and can therefore be advantageously used to form a tank for the fluid of the hydraulic circuits of the vehicle 10. To serve as a tank, the box-like portion 36 is provided with filling and discharge openings closed by removable plugs. The box-like portion 36 is further provided with union fittings for fluid delivery and return pipelines connected to the hydraulic circuits of the vehicle.

Above the upper wall 44 of the box-like portion 36 are fastened attachment elements 52 for the articulation of the cylinder or of the lifting cylinders (not shown) which actuate the raising and the lowering of the arm 18.

As shown in particular in Figure 3, the drive shaft 26 that drives the rear axle 14 extends through the box-like portion 36 of the frame 12. If the box-like portion 36 is used as a tank, a tubular element 54 is provided (see in particular Figures 1, 4 and 8) which extends through the inner volume of the box-like portion 36 and forms a cylindrical chamber through which extends the drive shaft 26. The tubular element 54 is fastened to the front and rear front walls of the box-like portion 36.

To leave space for the rear drive shaft 26 and front drive shaft 28, the tubular portion 38 of the support frame 12 is displaced laterally relative to the central longitudinal axis of the vehicle 10. The tubular portion 38 is thus positioned eccentrically relative to the box-like portion 36.

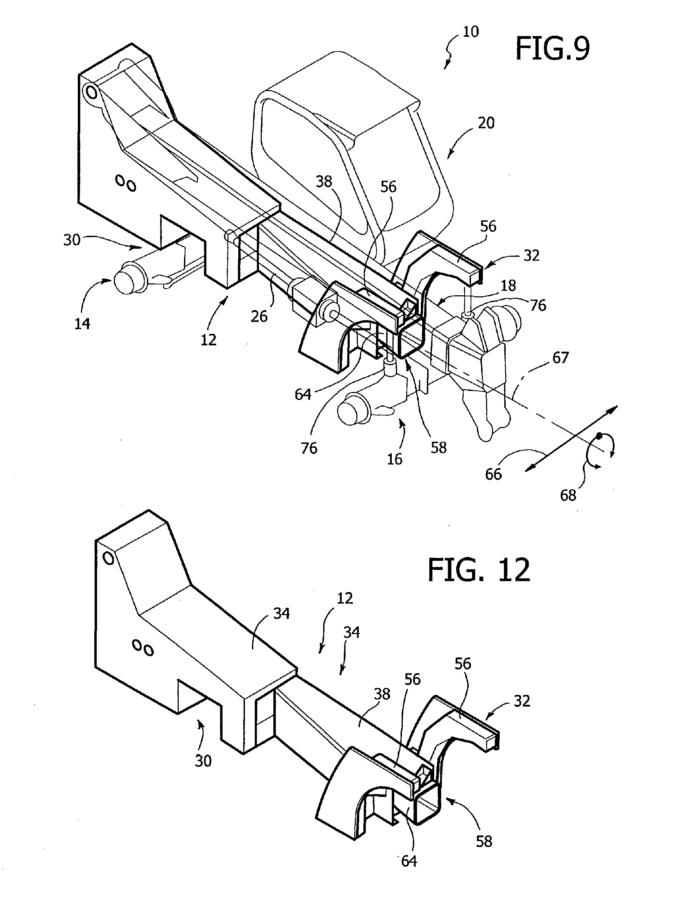

With reference to Figures 9 through 16, a second embodiment of the present invention shall now be described. The elements corresponding to those described previously are designated by the same numerical references. The general architecture of the vehicle 10 with regard to the arrangement of the main components (engine, chassis, cab and lifting arm) remains substantially unchanged in this second embodiment. The engine assembly was not shown in order to simplify the drawings. The arrangement of the engine assembly is similar to what is shown in Figures 1 through 3 for the first embodiment of the invention.

The support frame 12 of this second embodiment is illustrated schematically. In this embodiment, too, the support frame 12 has a central section with a closed shape. In this case too, a rear portion 36 with box-like shape and a front portion 38 with tubular shape are preferably provided. The tubular portion 38 of this second embodiment of the support frame 12 preferably has a tapered shape with increasing dimensions towards the front part of the vehicle. Hence, the cross section of the tubular portion 38 has a progressively increasing surface area in the direction that goes from the centre towards the front part of the vehicle. At the front end of the tubular portion 38 of the support frame 12 is provided an attachment section constituted by two arms 56 fastened to the tubular portion 38 and extending upwards starting from the opposite lateral flanks of the tubular portion 38.

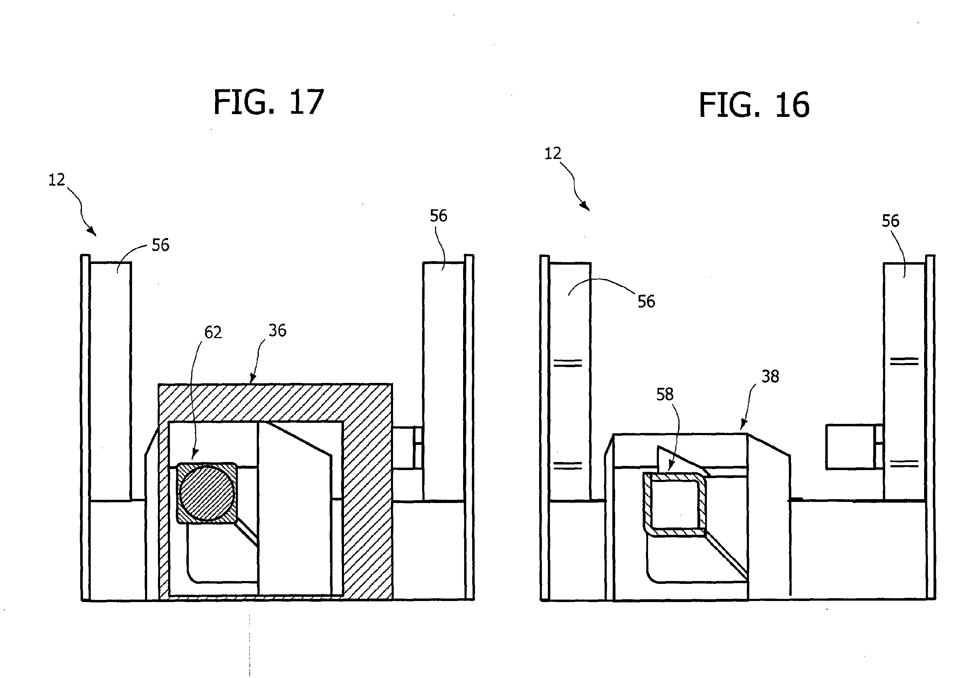

As shown in particular in the section of Figure 15, inside the tubular portion 38 is positioned an oscillating element 58. The oscillating element 58 is constituted by a tubular beam, preferably having tapered shape with increasing section towards the front part of the vehicle. The tubular element 58 has rear end 60 articulated to the support frame 12 by means of a ball joint 62. The rear end of the oscillating element 58 extends to the area in which the tubular portion 38 is fastened to the box-like portion 36, i.e. to the rear end of the tubular portion 38. The oscillating element 58 has a front end 64 that projects beyond the front end of the tubular portion 38.

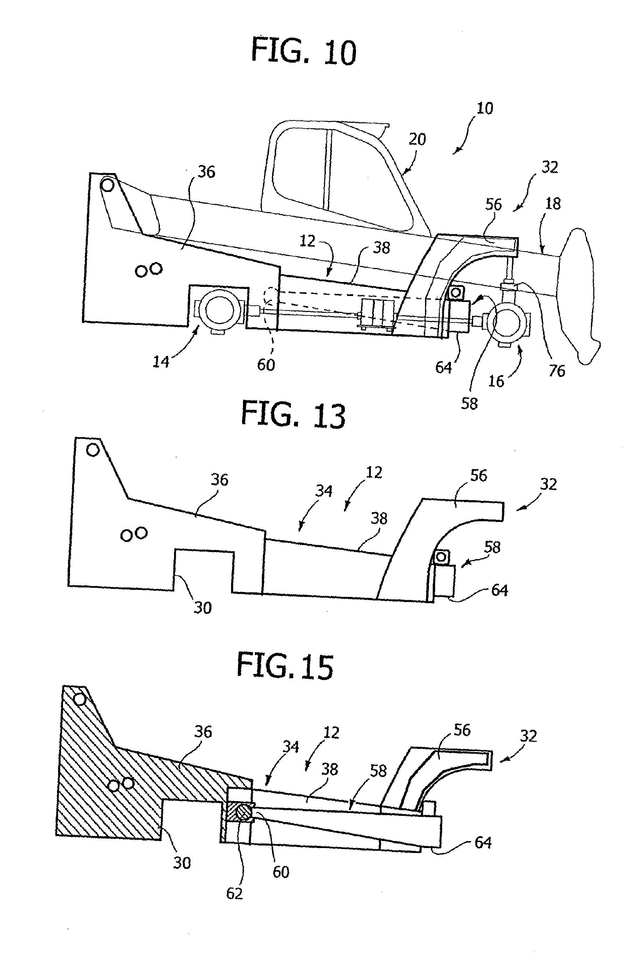

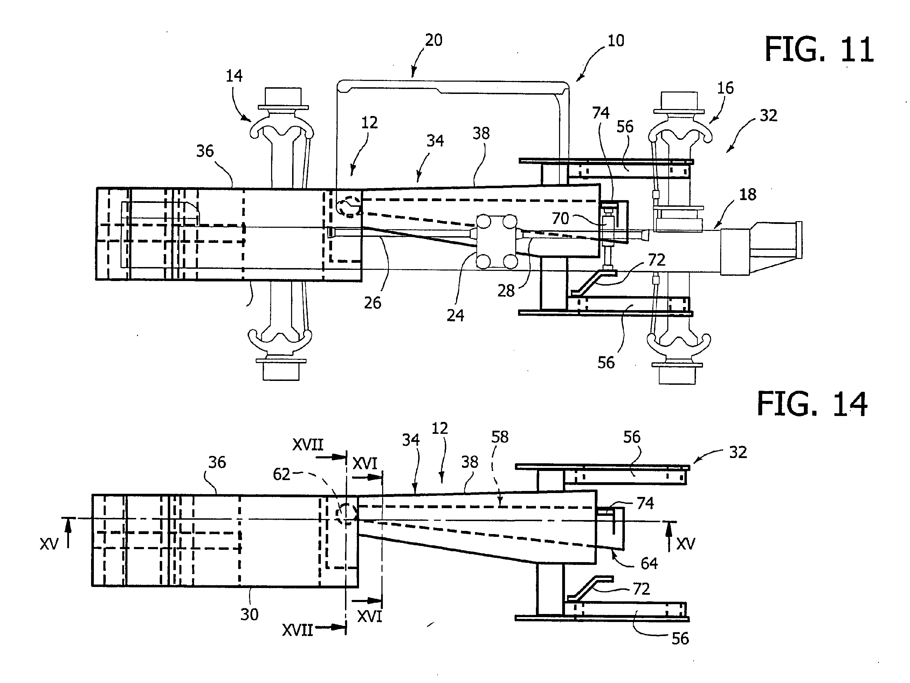

With reference in particular to Figures 9 and 10, the front axle 16 is fastened to the oscillating element 58. The support frame 12 can perform relative to the front axle 16 a displacement in the transverse direction as indicated by the double arrow 66 in Figure 9 and an oscillation around the central longitudinal axis 67 of the vehicle as indicated by the double arrow 68 in Figure 9. The vehicle 10 is provided with hydraulic actuators able to be operated by the driver to command the movement of the front axle 16 in the transverse direction 66 or the oscillation motion around the central longitudinal axis 67 of the vehicle as indicated by the arrow 68. With reference to Figure 11, the transverse movement of the axle 16 relative to the support frame 12 is actuated by a transverse hydraulic cylinder 70 having a first end fastened by means of a bracket 72 to the front section of the support frame 12 and a second end fastened to a bracket 74 that is fixed relative to the front end 64 of the oscillating element 58.

The oscillation motion of the front axle 16 around the longitudinal axis 67 of the vehicle is actuated by means of a pair of hydraulic cylinders designated by the reference 76 in Figure 9 and 10. Each hydraulic cylinder 76 extends in a substantially vertical direction and has an upper end connected to the end of a respective arm 56 and a lower end connected to the axle 16. The combined operation of the cylinders 76 allows to rotate the axle 16 with respect to the support frame 12 as shown by the double arrow 68 in Figure 9.

The movements along the directions 66, 68 of the axle 16 relative to the support frame 12 allow, in use to make the front part of the vehicle perform oscillations of limited amplitude without moving the wheels, e.g. to align to a load to be picked up a grip member positioned at the end of the lifting arm of the vehicle.

Both in the version in which the front axle 16 is fastened directly to the support frame 12, and in the version in which the front axle 16 is movable relative to the support frame 12, the closed shape of the support frame allows to obtain far better torsional rigidity capabilities than traditional support frames with channel or U shape. While the arrangement shown in the drawings does not limit the scope of the invention, it allows optimally to exploit the spaces to prevent the use of a closed section for the support frame 12 from entailing an excessive increase in the size of the vehicle.

The embodiments and the constructive details of the support frame 12 may be subject to numerous variants. In particular, the shape of the box-like portion 36 and/or of the tubular portion 38 of the support frame 12 may vary considerably from what is illustrated herein, whilst maintaining unaltered the concept of providing a closed shape of the frame.

## Claims

1. Lifting vehicle comprising:
- a support frame (12) having a rear section (30), a front section (32) and a central section (34) that extends from the rear section to the front section,
- a rear axle (14) and a front axle (16) connected respectively to the rear section (30) and to the front section (32) of the support frame (12),
- a lifting arm (18) articulated to the rear section (30) of the support frame (12) and extending forward,
- a control and drive cab (20) positioned laterally to the support frame (12), and
- an internal combustion engine (22) positioned laterally with respect to the control and drive cab (20),
**characterised in that** the central section (34) of the support frame (12) has a closed shape.

2. Vehicle as claimed in claim 1, **characterised in that** the central section (34) of the frame (12) comprises a box-shaped portion (36).

3. Vehicle as claimed in claim 2, **characterised in that** the box-shaped portion (36) is adjacent to the rear section (30).

4. Vehicle as claimed in claim 1, **characterised in that** the central section (34) of the support frame (12) comprises a portion with tubular shape (38).

5. Vehicle as claimed in claim 4, **characterised in that** the tubular section (38) is adjacent to the front section (32).

6. Vehicle as claimed in claim 5, **characterised in that** the tubular portion (38) has a substantially constant cross section.

7. Vehicle as claimed in claim 5, **characterised in that** the tubular section (38) has a tapered shape with increasing dimensions of the cross section towards the front part of the vehicle.

8. Vehicle as claimed in claim 7, **characterised in that** it comprises an oscillating element (58) positioned inside the tubular portion (38) and articulated to the support frame (12) by means of a ball joint (60).

9. Vehicle as claimed in claim 8, **characterised in that** the front axle (16) is fixed with respect to the oscillating element (58) and **in that** hydraulic actuator means (70, 76) are provided to actuate a displacement of the support frame (12) with respect to the front axle (16) along a transverse direction (66) and to actuate an oscillation of the support frame (12) with respect to the front axle (16) around a central longitudinal axis (67) of the vehicle.

10. Vehicle as claimed in claim 9, **characterised in that** the oscillating element (58) is articulated to the support frame (12) at the rear end of the tubular element (38).

11. Vehicle as claimed in claim 3, **characterised in that** the box-shaped portion (36) serves as a tank for the fluid of the hydraulic circuits of the vehicle.

12. Vehicle as claimed in claim 11, **characterised in that** the box-like portion (36) is traversed by a drive shaft (26) that actuates the rear axle (14).

13. Vehicle as claimed in claim 12, **characterised in that** the tubular portion (38) is laterally displaced relative to the central longitudinal axis (67) of the vehicle.
